# EUROPEAN PATENT SPECIFICATION

(11) **EP 4 185 981 B1**
(45) Date of publication and mention of the grant of the patent: **23.04.2025**
(21) Application number: 21755635.6
(22) Date of filing: 22.07.2021
(51) Int. Cl.: G06F 30/10, G06F 30/12, G06F 111/04

(54) **MACHINE LEARNING-BASED GENERATION OF CONSTRAINTS FOR COMPUTER-AIDED DESIGN (CAD) ASSEMBLIES**
AUF MASCHINELLEM LERNEN BASIERENDE GENERIERUNG VON EINSCHRÄNKUNGEN FÜR COMPUTERUNTERSTÜTZTE DESIGN (CAD) BAUGRUPPEN
GÉNÉRATION DE CONTRAINTES BASÉES SUR L'APPRENTISSAGE MACHINE POUR LES ASSEMBLAGES DE CONCEPTION ASSISTÉE PAR ORDINATEUR (CAD)

(30) Priority: 25.08.2020 IN 202041036517
(43) Date of publication of application: 31.05.2023
(73) Proprietor: Siemens Industry Software Inc., Plano, TX 75024 (US)
(72) Inventor: REINHART, Wesley, Boalsburg, Pennsylvania 16827 (US); WILLIAMS, Reed, Princeton, New Jersey 08540 (US); HOSCH, Kenneth A., Redondo Beach, California 90278 (US); SODHI, Rajneet, Pune, 411045 (IN)
(74) Representative: Horn Kleimann Waitzhofer Schmid-Dreyer Patent- und Rechtsanwälte PartG mbB
(86) International application number: PCT/US2021/042737
(87) International publication number: WO 2022/046329

(56) References cited:
- WO-A2-2006/031847
- US-A1- 2019 147 317
- SALMAN CHEEMA ET AL: "QuickDraw", PROCEEDINGS OF THE 2012 ACM ANNUAL CONFERENCE ON HUMAN FACTORS IN COMPUTING SYSTEMS, CHI '12, 1 January 2012 (2012-01-01), New York, New York, USA, pages 1037, XP055290152, ISBN: 978-1-4503-1015-4, DOI: 10.1145/2207676.2208550

## Description

### BACKGROUND

Modern computer systems can be used to create, use, and manage data for products and other items. Computer-aided technology (CAx) systems, for instance, may be used to aid in the design, analysis, simulation, or manufacture of products. Examples of CAx systems include computer-aided design (CAD) systems, computer-aided engineering (CAE) systems, visualization and computer-aided manufacturing (CAM) systems, product data management (PDM) systems, product lifecycle management (PLM) systems, and more. These CAx systems may include components (e.g., CAx applications) that facilitate the design and simulated testing of product structures and product manufacturing processes.
An automatic assembly mate creation for frequently-used components is known from US 2019/147 317 A1, wherein frequently-used CAD components are identified and machine learning techniques are applied to predict mateable entities and corresponding mate types for those components to automatically add components to a CAD model.
A prototype sketch-based drawing tool for drawing precise geometry diagrams that are often drawn by students and academics is known from "QuickDraw: Improving Drawing Experience for Geometric Diagrams", Salman Cheema et al., Proceeding of the 2012 ACM Annual Conference on Human Factors in Computing Systems, January 1, 2012.
The inferring of associative constraints and the supporting of objects for 3D curves are known from WO 2006/031 847 A2, wherein the curve is generated from a fixed number of inputs or constraints and the combination of constraint types determines the type of curve. Further, the curve is associative to its inputs such that when the reference geometry changes, the constraint is updated, and the curve will modify to reflect the associated input modifications.

### BRIEF DESCRIPTION OF THE DRAWINGS

Certain examples are described in the following detailed description and in reference to the drawings.
Figure 1 shows an example of a computing system that supports machine learning (ML)-based generation of constraints for CAD assemblies.
Figure 2 shows an example generation of a representation graph by a constraint learning engine in support of ML-based constraint generation according to the present disclosure.
Figure 3 shows an example of constraint edge insertions into a representation graph by the constraint learning engine in support of ML-based constraint generations according to the present disclosure.
Figure 4 shows an example of constraint generation by a constraint generation engine using a machine-learning model.
Figure 5 shows an example of logic that a system may implement to support ML-based generation of constraints for CAD assemblies.
Figure 6 shows an example of a computing system that supports ML-based generation of constraints for CAD assemblies.

### DETAILED DESCRIPTION

Modern technological advances have given rise to the design, simulation, and manufacture of increasingly complex products of various types across many different industries. CAx systems may support the design and tracking of product series that can include CAD parts numbering in the hundreds of thousands, millions, tens of millions and possibly more. As used herein, a CAD part may refer to any discrete object that can be represented digitally (e.g., as CAD data), and CAD parts may be combined to form products or components thereof. Along with parts, modern CAx systems can support the design and management of CAD assemblies, which may refer to any representation of how CAD parts combine to form a particular product or product component. As such, CAD assemblies may represent different products (e.g., a given CAD assembly for a hard drive comprised of multiple components represented as CAD parts such as an enclosure, bolts, optical storage components, etc.). CAD assemblies may also represent different subsystems or components of a given product (e.g., electrical and cooling subsystems of a server rack), different variants of a given product (e.g., a base vehicle model, mid-range vehicle model, top end vehicle model), and the like.

Assembly creation in modern CAx contexts may involve the design and positioning of hundreds of individual CAD parts in relatively small assemblies to hundreds of thousands of components (or more) in relatively large assemblies. Moreover, the various parts that form CAD assemblies may be interconnected in various ways, with a common example being nuts, bolts, shafts, or screws that fit into other CAD parts at holes of specific diameters and geometry. Such CAD parts may be interrelated according to a particular physical position and certain orientation at which CAD parts interconnect in a given CAD assembly. In particular, CAD assemblies may support constraints that limit CAD parts that form the CAD assemblies. As used herein, a constraint may refer to any specified limitation on a degree of movement for a CAD part of a CAD assembly. CAD parts in a CAD model may have multiple degrees of freedom in terms of movement, for example along 'x', 'y', or 'z' dimensional axes of a 3D system the CAD part is designed in and/or rotations along, about, or around the 'x', 'y', or 'z' axes.

Constraints may be specified for a given CAD part or between multiple CAD parts to limit (e.g., restrict or prevent) movement along at least one the degrees of movement for or between CAD parts. As such, constraints in CAD assemblies may limit how a CAD part can or cannot move relative to another CAD part. Such constraints in CAD assemblies may reflect physical restrictions of movement upon construction of a physical product represented by such CAD assemblies. As an illustrative example, constraints set for plate and bolt parts of a CAD assembly may restrict the bolt part from drifting sideways through the plate (e.g., along an 'x' or 'y' direction) or prevent the bolt from falling through the hole in the plate (e.g., along a 'z' direction) at which the bolt is affixed to the plate in the CAD assembly. While such an example may seem simple, setting appropriate constraints for CAD assemblies comprised of hundreds of thousands of CAD parts or more can be a challenge.

Determining and specifying constraints in modern CAD contexts can be time-consuming, resource-consuming, and tedious. For example, mating of CAD parts in CAD assemblies may be performed through manual labelling of complementary features on each CAD part, but such processes require manual design work and can be error-prone. User-specified constraints may be another way to manually specify movement restrictions between interconnected CAD parts. However, a given CAD assembly may be constrained in a near-limitless number of ways, many of times achieving the same degree of movement limitations, but with differing constraint setting based on user preference. Such manual processes may be time-consuming, error-prone, inconsistent, and non-optimal. The invention is defined by the appended claims.

The disclosure herein may provide systems, methods, devices, and logic for ML-based generation of constraints for CAD assemblies. As described in greater detail herein, various features are presented to support generation of constraints for CAD assemblies through machine-learning. The ML-based constraint generation features of the present disclosure may support the automatic detection, application, and validation of constraints for CAD parts of a CAD assembly, and may support constraint generation without actual placement of CAD parts into a CAD assembly. Moreover, training data for such ML-based solutions need not include explicitly-constrained CAD models, as the ML-based constraint generation features presented herein may support inference of constraints from existing designs. Through the present disclosure, constraint and CAD parts determination, specification, and positioning in CAD assemblies can be made simpler and faster through proposal of likely CAD part locations in a CAD assembly, which can reduce the burden on CAD users to navigate the 3D space of a CAD assembly. The presented features may also enable detection of complementary CAD parts in a CAD assembly if the final arrangement of the CAD assembly is not known, thus improving efficiency of CAD processes.

These and other ML-based constraint generation features and technical benefits are described in greater detail herein.

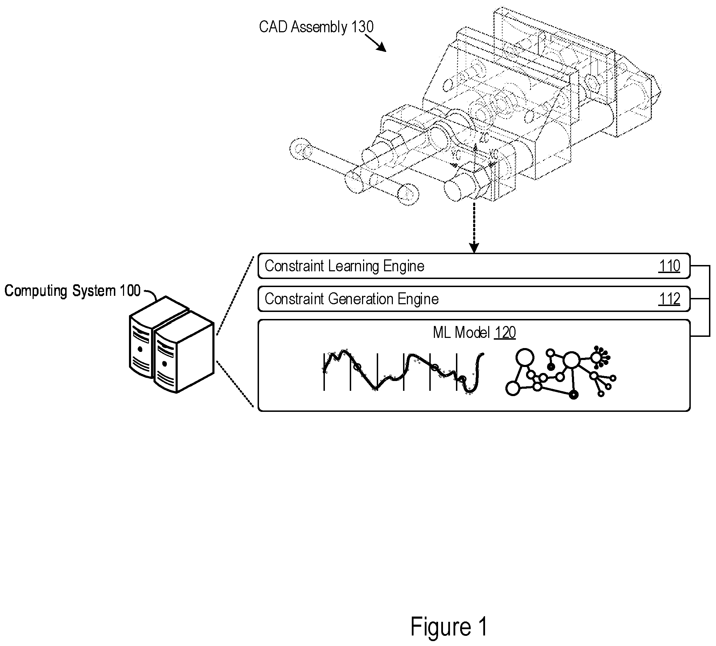

Figure 1 shows an example of a computing system 100 that supports generation of ML-based generation of constraints for CAD assemblies. The computing system 100 may take the form of a single or multiple computing devices such as application servers, compute nodes, desktop or laptop computers, smart phones or other mobile devices, tablet devices, embedded controllers, and more. In some implementations, the computing system 100 implements a CAx tool, application, or program to aid users in the design, analysis, simulation, or 3D manufacture of products.

As an example implementation to support any combination of the ML-based constraint generation features described herein, the computing system 100 shown in Figure 1 includes an constraint learning engine 110, and a constraint generation engine 112. The computing system 100 may implement the engines 110 and 112 (including components thereof) in various ways, for example as hardware and programming. The programming for the engines 110 and 112may take the form of processor-executable instructions stored on a non-transitory machine-readable storage medium and the hardware for the engines 110 and 112 may include a processor to execute those instructions. A processor may take the form of single processor or multi-processor systems, and in some examples, the computing system 100 implements multiple engines using the same computing system features or hardware components (e.g., a common processor or a common storage medium).

In the example shown in Figure 1, the computing system 100 also includes a machine-learning model 120. The computing system 100 may itself implement the ML model 120 or, in some implementations, remotely access the ML model 120. The ML model 120 may implement or support any number of machine-learning capabilities in support of constraint generation for CAD assemblies. For instance, the ML model 120 may implement any number of supervised, semi-supervised, unsupervised, or reinforced learning models to generate constraints for or between CAD parts of CAD assemblies. As illustrative examples, the ML model 120 may utilize Markov chains, context trees, support vector machines, neural networks, Bayesian networks, or various other machine learning components, techniques, or algorithms to interpret existing CAD assemblies and subsequently determine constraints for an input CAD assembly or input CAD parts that comprise the input CAD assembly. As a continuing example, training and application of the ML model 120 is discussed in the context of the constraint learning engine 110 and the constraint generation engine 112.

In operation, the constraint learning engine 110 may access a CAD assembly 130 that includes multiple CAD parts and generate a representation graph of the CAD assembly 130. Nodes in the generated representation graph represent geometric faces of the multiple CAD parts and edges in the representation graph may represent geometric edges of the multiple CAD parts. The constraint learning engine 110 may further determine constraints in the CAD assembly 130, and the constraints may limit a degree of movement between geometric faces of different CAD parts in the CAD assembly 130 and insert constraint edges into the representation graph 210 that represent the determined constraints. Then, the constraint learning engine 110 may provide the representation graph as training data to train the ML model 120. In operation, the constraint generation engine 112 may generate constraints for a different CAD assembly by applying the ML model 120 for the different CAD assembly.

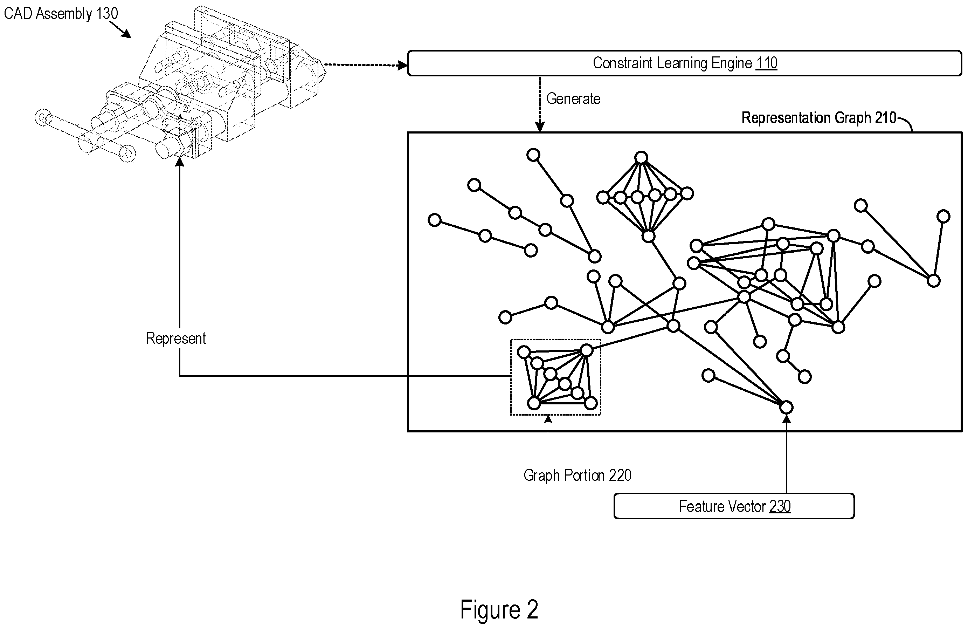

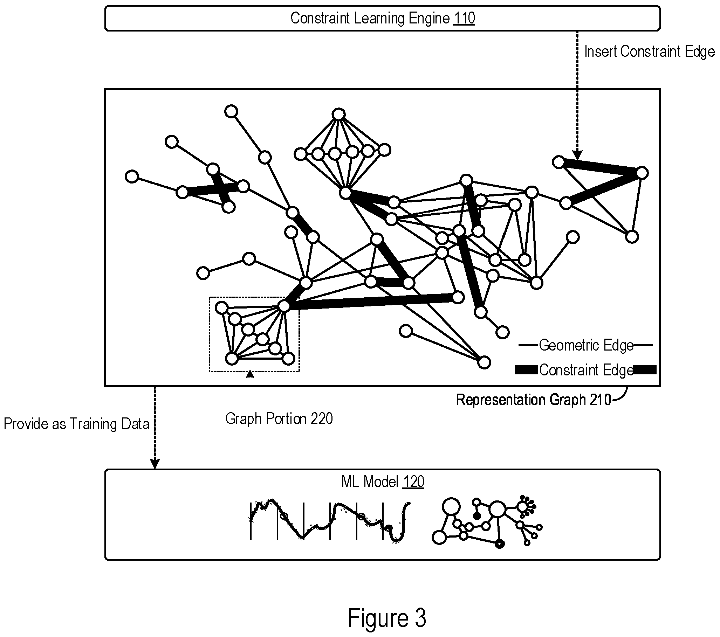

These and other ML-based constraint generation features are described in greater detail herein. Training of the ML model 120 to support ML-based constraint generation is described next via the constraint learning engine 110 with reference to Figures 2 and 3. To support ML training, the constraint learning engine 110 may represent CAD assemblies in a specific form interpretable by the ML model 120 as training data, in a particular as a representation graph that can be provided to the ML model 120 to train on and learn from.

Figure 2 shows an example generation of a representation graph by the constraint learning engine 110 in support of ML-based constraint generation according to the present disclosure. The constraint learning engine 110 may generate representation graphs for completed CAD assemblies, which the ML model 120 may process to learn or predict constraints for different CAD assemblies (e.g., incomplete or unconstrained). In the example shown in Figure 2, the constraint learning engine 110 accesses the CAD assembly 130. The CAD assembly 130 may be a completed CAD model or design, with CAD parts that form the CAD assembly 130 properly positioned and aligned within a 3-dimensional coordinate system to reflect a physical design for a product or product component.

The constraint learning engine 110 may access the CAD assembly 130 in various ways. For instance, a user may input the CAD assembly 130, specifying the CAD assembly 130 as a completed CAD model to train the ML model 120. The constraint learning engine 110 may load the CAD assembly 130 from a CAD model repository or CAD database that stores completed product designs. The CAD assembly 130 may be represented in any 3D form, such as a boundary representation (BREP), and the multiple CAD parts that form the CAD assembly 130 may also be represented as BREPs comprised of geometric faces, edges, or other 3D geometric elements and primitives. Each CAD part may be separate design instance or object, e.g., as designed or implemented through a CAD application. In the example shown in Figure 2, the CAD assembly 130 represents a vise tool that includes multiple CAD parts, including bolts, plates, shafts, and the like, each of which may be a disparate CAD object in a CAx application.

To facilitate machine-learning, the constraint learning engine 110 may generate a representation graph from CAD assemblies to provide as training data for the ML model 120. In some sense, the constraint learning engine 110 may transform the CAD assembly 130 from a 3D geometric representation into a data format interpretable by the ML model 120 to learn or predict constraints in CAD assemblies. In particular, representation graphs generated from CAD assemblies may provide a graph-based representation of 3D structures, and the constraint learning engine 110 may decompose a 3D geometry into nodes and edges in generating a representation graph. Nodes in a generated representation graph may represent geometric faces of a CAD assembly and edges in the representation graph may represent the geometric edges (also referred to as topological edges) at which geometric faces of the CAD assembly meet or intersect.

In Figure 2, the constraint learning engine 110 generates the representation graph 210, which may represent the geometric faces and geometric edges of the CAD assembly 130 in a graph-based form. The constraint learning engine 110 may generate the representation graph 210 by parsing the 3D geometry of the multiple CAD parts that form the CAD assembly 130. For instance, the constraint learning engine 110 may iterate through each CAD part of the CAD assembly 130, and for a given CAD part, insert a node into the representation graph 210 for each geometric face of the given CAD part and insert edges between nodes in the representation graph 210 that represent geometric edges at which geometric faces of the given CAD part meet. The constraint learning engine 110 may also insert edges into the representation graph 210 between nodes corresponding to different CAD parts with geometric faces that meet or intersect in the CAD assembly 130. Such edges may represent portions of the CAD assembly at which different CAD parts intersect and meet (which may be at a single or multiple geometric faces of the different CAD parts).

The constraint learning engine 110 may iterate through each CAD part of the CAD assembly 130 until the CAD assembly 130 is entirely represented in the representation graph 210. Different graph portions of the representation graph 210 may represent different CAD parts of the CAD assembly 130. A graph portion may refer to a collection of nodes and edges in the representation graph 210, and an example graph portion is illustrated in the Figure 2 as the graph portion 220. The graph portion 220 may represent a given CAD part of the CAD assembly 130, and in this case the graph portion 220 represents a hexagonal nut part present in the CAD assembly 130.

Note that a representation graph generated by the constraint learning engine 110 may be disjointed in that some graph portions may be disconnected from other graph portions of the representation graph (e.g., no path of nodes and edges exists in the representation graph to connect the disconnected graph portions). This may be the case as a given CAD part or set of CAD parts of the CAD assembly 130 do not share any geometric edges with the rest of the CAD assembly 130. In some implementations, the constraint learning engine 110 may generate a representation graph to represent multiple different CAD assemblies. In such implementations, the generated representation graph may be disjointed since different CAD assemblies may represent separate, unrelated structures that do not share any common geometric edges.

In the example shown in Figure 2, the representation graph 210 is illustrated as a 2D visual graph comprising nodes illustrated as circles and edges illustrated as straight lines between nodes. The constraint learning engine 110 may generate, represent, or store a representation graph in any number of forms, e.g., as arrays, value pairs (e.g., to represent edges), adjacency matrices or lists, or through any number of other data forms or data structures.

The constraint learning engine 110 may represent any number of parameters of the CAD assembly 130 in a generated representation graph, including geometric and topological characteristics of the CAD assembly 130 or CAD parts of the CAD assembly 130. In some implementations, the constraint learning engine 110 may track characteristics of geometric faces of a CAD assembly as values encoded in, assigned to, associated with, or appended to nodes of a representation graph. As one way of doing so, the constraint learning engine 110 may insert feature vectors into the nodes in the representation graph 210, and a given feature vector may represent topological and geometric features of a corresponding geometric face of the CAD assembly 130.

A feature vector may refer to any data form by which features (e.g., parameters, or attributes) of a geometric face of a CAD assembly are captured, extracted or represented. Example features that the constraint learning engine 110 may extract and represent in a feature vector of a given geometric face include a primitive type of the given geometric face, a CAD part identifier that the given geometric face is a part of, a number of other geometric faces adjacent to the given geometric face, an area of the given geometric face, a perimeter of the given geometric face, a primitive radius for the given geometric face, a normal vector of the given geometric face, a rotation or scale invariant descriptor of the given geometric face, and more, or any combinations thereof. While some example features are provided herein, any descriptive data of the CAD assembly 130 can be extracted and encoded into the representation graph 210 via feature vectors.

In some examples, the constraint learning engine 110 may extract a feature vector for a given geometric face as an n-dimensional array of parameter values, as a concatenation of parameter values, or in various other structures or formats. Insertion of a feature vector into the representation graph 210 may include any form by which the constraint learning engine 110 associates, links, otherwise correlates a feature vector extracted for a particular geometric face to a corresponding node in the representation graph 210 that represents the particular geometric face. In the example of Figure 2, the constraint learning engine 110 inserts the feature vector 230 into the representation graph 210 at a node that corresponds to the geometric face of the CAD assembly 130 from which the feature vector 230 is extracted. Accordingly, the constraint learning engine 110 may track characteristics of geometric faces of CAD assemblies in representation graphs, which may further support ML training to determine and predict CAD assembly constraints with increased precision and accuracy.

In any of the ways described herein, the constraint learning engine 110 may generate a representation graph that represents one or multiple CAD assemblies. The representation graph may facilitate machine-learning in that it can encode geometric and topological features of CAD assemblies on a per-face basis. The constraint learning engine 110 may further generate the representation graph 210 to include, track, or represent constraints in the CAD assembly 130 through constraint edges, as described in greater detail next with reference to Figure 3.

Figure 3 shows an example of constraint edge insertions into a representation graph by the constraint learning engine 110 in support of ML-based constraint generations according to the present disclosure. To insert constraint edges, the constraint learning engine 110 may determine constraints in the CAD assembly 130 and then insert constraint edges into the representation graph 210 that represent the determined constraints in the CAD assembly 130. In particular, the constraint learning engine 110 may insert constraint edges between specific nodes in the representation graph 210, which may indicate the specific geometric faces (and corresponding CAD parts) that are constrained to another in terms of at least one degree of movement in the CAD assembly 130.

In support of constraint edge insertions into the representation graph 210, the constraint learning engine 110 may determine constraints in the CAD assembly 130 in various ways. As one example, the constraint learning engine 110 may determine constraints in the CAD assembly 130 by identifying user-specified constraints in the CAD assembly 130. As the CAD assembly 130 may be a previously generated or completed CAD model, various constraints may be expressly set in the CAD assembly 130 by engineers or designers during the design process. Put another way, the CAD assembly 130 may be a constrained CAD model. As such, the constraint learning engine 110 may identify any user-specified constraints expressly set in the CAD assembly 130 and insert constraint edges into the representation graph 210 accordingly.

In some instances, the CAD assembly 130 may encode user-specified constraints between specific geometric faces of different CAD parts. In such instances, the constraint learning engine 110 may identify the corresponding nodes of the specific geometric faces, and insert a constraint edge between the corresponding nodes to represent the user-specified constraint. In other examples, the CAD assembly 130 may encode user-specified constraints between different CAD parts of the CAD assembly 130 (e.g., between a bolt part and a plate part that the bolt part is inserted into). In this case, the constraint learning engine 110 may determine a selected geometric face for each of the different CAD parts and insert a constraint edge between the nodes in the representation graph 210 that correspond to the selected geometric faces. Selection of geometric faces by the constraint learning engine 110 may be performed through random selection, least distance between the selected geometric faces, greatest area, normal vector comparisons, default faces specified for given CAD parts, or according to any number of additional or alternative selection processes or criteria.

As another example of constraint determinations, the constraint learning engine 110 may infer any number of constraints from a geometry of the CAD assembly 130. In that regard, the constraint learning engine 110 may be capable of processing and determining constraints from the CAD assembly 130 even when the CAD assembly 130 is not expressly constrained or manually labeled with user-specified constraints. That is, the constraint learning engine 110 may support constraint determinations from the CAD assembly 130 even when no specific constraints are set or encoded in the CAD assembly 130, so long as the CAD parts that form the CAD assembly are positioned relative to one another. The constraint learning engine 110 may thus support automatic detection and application of constraints for CAD assemblies, which may increase the efficiency in training and application of ML-based techniques for constraint generations.

To infer constraints in the CAD assembly 130, the constraint learning engine 110 may determine formulaic representations of constraints, including different formulaic representations for constraints of different constraint types. As used herein, a formulaic representation may include any combination of functions, expressions, or formulas by which the constraint learning engine 110 may detect a constraint between geometric faces of a CAD assembly. The constraint learning engine 110 may then compare geometric faces of the CAD assembly 130 by applying the formulaic representations to determine constraints of the different constraint types between the geometric faces.

As illustrative examples, the constraint learning engine 110 may infer constraints of a "touch" constraint type and an "align" constraint type from the CAD assembly 130. For a touch constraint type, the constraint learning engine 110 may determine the formulaic representation as **n***ᵢ* - **n***ⱼ* = -1, and **n***ᵢ ·* **r***ᵢⱼ* = **n***ⱼ* · **r***ᵢⱼ* = 0, in which **n***ᵢ* is the unit normal of geometric face *i*, **n***ⱼ* is the unit normal of geometric face *j,* and **r***ᵢⱼ =* **c***ⱼ - cᵢ* is the displacement vector between centroids **c***ᵢ* and **c***ⱼ* of geometric faces i and j respectively. For the align constraint type, the constraint learning engine 110 may determine the formulaic representation as **n***ᵢ* · **n***ⱼ* = 1 and **n***ᵢ* · **r***ᵢⱼ* = **n***ⱼ -* **r***ᵢⱼ* = 1, in which **n***ᵢ* is the unit normal of geometric face i, **n***ⱼ* is the unit normal of geometric face*j*, and **r***ᵢⱼ =* **c***ⱼ -* **c***ᵢ* is the displacement vector between centroids **c***ᵢ* and **c***ⱼ* of geometric faces i and j respectively. In some implementations, the constraint learning engine 110 may include a further criterion in the formulaic representation of the align constraint type that the bounding boxes of geometric faces i and j intersect.

When the formulaic representations are satisfied (e.g., **n***ᵢ* · **n***ⱼ* = -1 instead of another value, and **n***ᵢ* · **r***ᵢⱼ* = **n***ⱼ* · **r***ᵢⱼ* = 0 instead of a non-zero value), then the constraint learning engine 110 may determine that the corresponding constraint exists between the geometric faces being compared via the formulaic representation. Determination of formulaic representations may be customized, user-configured, or pre-loaded as specific formulas, expressions, or logic to evaluate in order to determine, detect, or infer constraints between geometric faces.

The constraint learning engine 110 may infer constraints in the CAD assembly 130 by applying any number of formulaic representations to geometric faces of the CAD assembly 130. While a brute force comparison for every pair of geometric faces in the CAD assembly 130 using formulaic representations is possible, such an approach would be inefficient and require increased computational resources and time. In some implementations, the constraint learning engine 110 may selectively compare geometric faces of the CAD assembly 130 by selecting particular geometric faces to apply the formulaic representations to. As one example of selective comparison, the constraint learning engine 110 may determine not to compare geometric faces of the same CAD part. This may be the case as geometric faces of the same CAD part may be designed as components of the same rigid object instance. In that regard, geometric faces of the CAD part may be designed to have no degrees of freedom with respect to one another (and thus comparisons between geometric faces of the same CAD part would not make sense). The geometric faces of a bolt part, for example, are part of the same physical structure and are limited as such. As no degrees of freedom exist between geometric faces of the same CAD part, then modern CAD systems may be incapable of even setting constraints between geometric faces of the same CAD part, and the constraint learning engine 110 need not compare geometric faces of the same CAD part.

As such, the constraint learning engine 110 may apply formulaic representations (of various constraint types) to geometric faces of different CAD parts, but not to geometric faces of the same CAD part. The constraint learning engine 110 may also selectively compare geometric faces based on distance. Distance-based selection of geometric faces for comparison and application of formulaic representations may leverage an aspect of constraints as typically being applying between proximate CAD parts. As such, the constraint learning engine 110 may determine not to compare geometric faces of a CAD part to another CAD part that is relatively far in the CAD assembly 130. To illustrate, for a CAD assembly representing an aircraft, it would not make sense to apply constraint inference computations between CAD parts in the aircraft wing and the engine, since such parts are disparate, physically distant, and unrelated. Distance may thus be used as a relationship measure for CAD assemblies.

To apply distance-based selective comparisons, the constraint learning engine 110 may iterate through geometric faces of a given CAD part and compare the geometric faces of the given CAD part to any geometric faces of other CAD parts that are within a threshold distance (e.g., Euclidean distance in a coordinate system in which the geometric faces are positioned). Threshold distances applied by the constraint learning engine 110 may be predetermined or user-configured. Thus, for a formulaic representation of a given constraint type (e.g., of the touch constraint type) the constraint learning engine 110 may compare selected geometric faces of the CAD assembly 130 by identifying a geometric face of a given CAD part of the CAD assembly 130, determine geometric faces of other CAD parts that are within a threshold distance from the identified geometric face of the given CAD part, and apply the formulaic representation of the given constraint type between the identified geometric face of the given CAD part and each of the geometric faces of the other CAD parts to determine the constraints of the given constraint type.

In such a manner, the constraint learning engine 110 may iterate through each geometric face of the given CAD part, and then eventually iterate through each geometric face in the CAD assembly 130. Application of the formulaic representations of any number of constraint types may indicate whether the compared geometric faces are constrained according to any of the constraint types. If so (e.g., **n***ᵢ* · **n***ⱼ* = -1, and **n***ᵢ* · **r***ᵢⱼ* = **n***ⱼ* - **r***ᵢⱼ* = 0 for two selected geometric faces i and j), the constraint learning engine 110 may infer a constraint for the selected geometric faces and insert an edge constraint into the representation graph 210 between the corresponding nodes of the selected geometric faces. If not, (e.g., **n***ᵢ* · **n***ⱼ* ! = -1 and/or **n***ᵢ* · **r***ᵢⱼ* = **n***ⱼ* · **r***ᵢⱼ* ! = 0 for two selected geometric faces *i* and *j*), the constraint learning engine 110 may determine not to insert a constraint edge between the corresopnding nodes.

In any combination of the ways described herein, the constraint learning engine 110 may determine constraints in the CAD assembly 130 and insert constraint edges into the representation graph 210 that represent the determined constraints.

Note that the constraint learning engine 110 may differentiate between different types of edges in representation graph 210. In Figure 3, such a distinction is illustrated through thin edge lines for geometric edges between geometric faces of the CAD assembly 130 and thick edge lines for constraint edges between geometric faces of the CAD assembly 130. In implementing such differentiations, the constraint learning engine 110 may set edge type parameters in the representation graph 210 to identify edges in the representation graph 210 as geometric edges or constraint edges. In some implementations, the constraint learning engine 110 may further differentiate different types of constraint edges in the representation graph 210, which may specify a specific type of constraint set or inferred between geometric faces of the CAD assembly 130, user-specified constraints, and more.

Through generation of the representation graph 210 (with inserted constraint edges), the constraint learning engine 110 may generate training data for the ML model 120 to learn and predict constraints in CAD assemblies. Accordingly, the constraint learning engine 110 may provide the representation graph 120 (or portions thereof) as training data to train the ML model 120. The constraint learning engine 110 may train the ML model 120 with any number of representation graphs that represent any number of different CAD assemblies.

The ML model 120 may be trained using data encoded in the representation graph 210 of the CAD assembly 130, as well as any number of additional or alternative representation graphs or any number of other CAD assemblies. In doing so, the ML model 120 may process the data encoded in the representation graph(s) to learn constraint rules to apply for constraint determinations for CAD parts of different CAD assemblies.

In some implementations, the ML model 120 implements a random forest classifier which can learn constraint rules and predict whether a pair of geometric faces are "constrained" or "not constrained", doing so based on feature vectors extracted for the geometric faces. In effect, the ML model 120 may implement a classifier function *f*(*xᵢ,xⱼ*) → *y,* in which *xᵢ* and *xⱼ* may represent feature vectors of geometric faces i and j and y may be a binary variable indicating whether geometric faces i and *j* of an input CAD assembly or of two input CAD parts are constrained or not. To ensure symmetry of the results, the constraint learning engine 110 may configure the ML model 120 such that an absolute value of the difference is used, e.g., *f*(|*xᵢ - xⱼ*|) → *y.*

To implement such a classifer function, the ML model 120 may train using the assembly and constraint data encoded in representation graphs. In particular, the ML model 120 (or the constraint learning engine 110) may parse the representation graph(s) based on node pairs to extract training data in the form of pairs or tuples comprising |*xᵢ - xⱼ*| (which may be extracted as a computation between the feature vectors encoded for the corresponding nodes for geometric faces i and j) and y (which may be extracted from the representation graph as whether a constraint edge exists between the nodes corresponding to geometric faces i and j). The ML model 120 may then learn a suitable transformation which may reduce or minimize the error in predicting *y.* In some instances, the ML model 120 may generate different classification functions for different constraint types, or the implemented classification function may generate separate outputs y for different constraint types. As such, the ML model 120 may process training data and generate contraints for input CAD assemblies and CAD parts thereof.

The ML model 120 may be capable of learning constraint rules even with relatively little training data. Even when trained on a single, relatively simple CAD assembly, the ML model 120 may process the generated representation graph for the single CAD assembly and be able to generate constraints for different CAD assemblies of increased complexity and greater variety in complexity. As one experimental example, the constraint learning engine 110 may train the ML model 120 using a representation graph generated for a simple CAD assembly of a plate with eight (8) identical holes and eight (8) identical screws that fit into the plate holes. Training on such a representation graph, the ML model 120 may be capable of generating constraints for input CAD assemblies of substantially greater variety and geometry, constraint types, and complexity. As such, the ML model 120 may learn broadly applicable constraint rules even from relatively little training data, which may increase the efficiency and applicability of the ML-based constraint generation features of the present application.

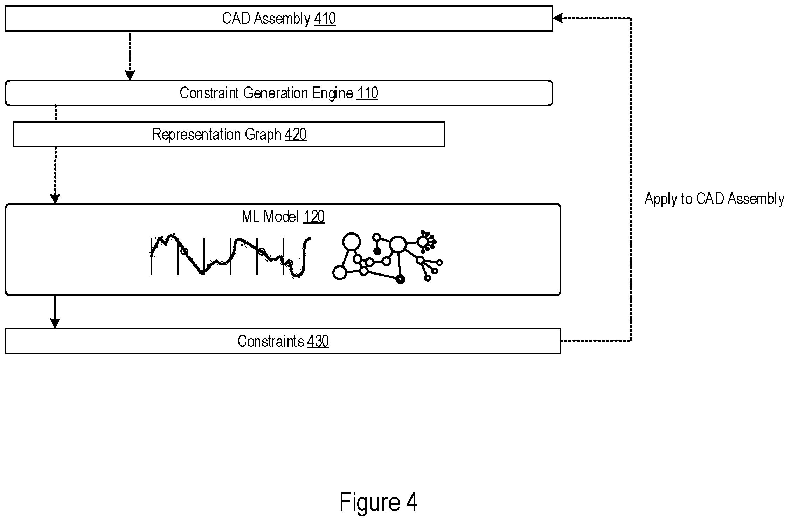

Figure 4 shows an example of constraint generation by the constraint generation engine 112 using the ML model 120. The ML model 120 may be trained using representation graphs generated by the constraint learning engine 110, and the application of the ML model 120 may provide constraint prediction capabilities for input CAD assemblies and various CAD parts of the input CAD assemblies.

In Figure 4, the constraint generation engine 112 accesses a CAD assembly 410. The CAD assembly 410 may be incomplete, unconstrained, or be comprised of disparate, unplaced CAD parts. For instance, the CAD assembly 410 accessed by the constraint generation engine 112 may include a partially-completed assembly structure and additional CAD parts to be inserted or placed in the assembly structure. As another example, the CAD assembly 410 may be in the form of a list of CAD parts to insert, place, and constrain in an assembly structure. As another example, the CAD assembly 410 may be an unconstrained CAD model. In any of these examples, the constraint generation engine 112 may apply the ML model 120 to generate constraints for the CAD assembly 410.

In some implementations, the constraint generation engine 112 may generate constraints for the CAD assembly 410 through identification or selection of two (or more) CAD parts of the CAD assembly 410. Such CAD part selection may be determined from user inputs or selections, whether as express selection of CAD parts in the CAD assembly 410 to predict constraints for or via selection of the CAD parts through an application UI to include in the CAD assembly 410. For unconstrained models or other forms of the CAD assembly 410, the constraint generation engine 112 may determine the multiple CAD parts that comprise the CAD assembly 410 for constraint generations.

To apply the ML model 120, the constraint generation engine 112 may construct a representation graph for the CAD assembly 410 or the selected CAD parts thereof. The constraint generation engine 112 may do so in any of the ways described herein, though the constraint generation engine 112 need not determine or infer constraints from the CAD assembly 410. Moreover, constraint inference may not even be possible, as the CAD assembly 410 or CAD parts thereof may not be properly positioned in the CAD assembly 410 (and for which the ML model 120 can predict constraints, positioning, and alignments for). In generating the representation graph for the CAD assembly 410, the constraint generation engine 112 may extract feature vectors for the geometric faces of the CAD assembly 410 and encode the extracted feature vectors as part of the generated representation graph for the CAD assembly 410. In the example of Figure 4, the constraint generation engine 112 generates the representation graph 420 for the CAD assembly 410, and provides the representation graph 420 to the ML model 120.

The ML model 120 may process the representation graph 420 to determine pairs of geometric faces of the CAD assembly 410 (which can be extracted and interpreted as pairs of nodes in the representation graph 420 for different CAD parts). Then, the ML model 120 may generate constraints 430 for the CAD assembly 410. In some examples, the ML model 120 may generate the constraints 430 in a form of constraint predictions for pairs of geometric face, for example according to a learned classification function *f*(*xᵢ,xⱼ*) → *y.* Note that the output y provided by the ML model 120 may be a normalized probability value (e.g., between 0 and 1), indicative of a degree to which the ML model 120 predicts the corresponding pair of geometric faces of the CAD assembly 410 should be constrained.

In some implementations, the constraint generation engine 112 may generate a ranked list from the constraints 430, which a CAD application may provide for user feedback. Such user feedback may be used to set express constraints in the CAD assembly 410, position CAD parts based on the generated constraints 430 or ranked list, or otherwise modify, process, or design the CAD assembly 410 based on the generated constraints 430. The constraints 430 generated by the constraint generation engine 112 (via the ML model 120) may further be delineated based on constraint type, and constraints of different constraint types may be applied to the CAD assembly 410 accordingly. The constraint generation engine 112 may generate and apply the constraints 430 to the CAD assembly 410 in sequence for two CAD parts, in batches (e.g., for multiple CAD parts or for entire sections of the CAD assembly 410), or all at once for the entire CAD assembly 410. Also, multiple different types of constraints may be applied between CAD parts, which may limit multiple degrees of freedom between the CAD parts.

In some implementations, the constraint generation engine 112 may determine to a apply a selected combination of the constraints 430 that together represent a viable positioning of the CAD parts oft he CAD assembly 410. Such a selected combination may be determined based any number of selection criteria. In some implementations, the constraint generation engine 112 may present different viable combinations of the constraints 430 for positioning the CAD parts. The constraint generation engine 112 may do without applying any of the constraints 430 (or subsets thereof) to the CAD assembly 410, e.g., to support user selection and subsequent application of a selected combination of the constraints 430.

In any of the ways described herein, ML-based constraint generations may be implemented. While many ML-based constraint generation features have been described herein through illustrative examples presented through various figures, the constraint learning engine 110 and the constraint generation engine 112 may implement any combination of the ML-based constraint generation features described herein.

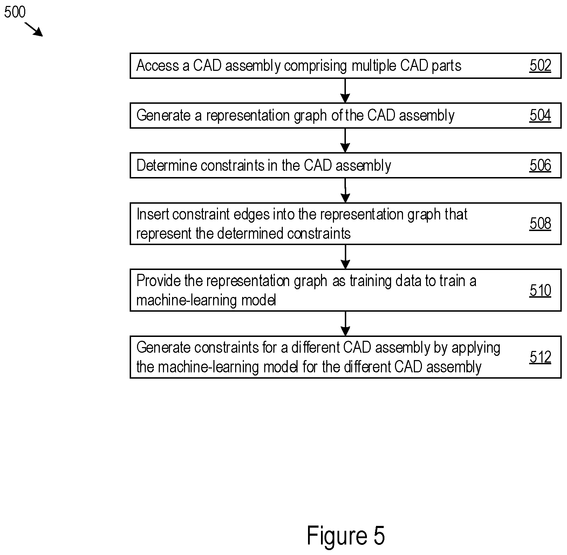

Figure 5 shows an example of logic 500 that a system may implement to support ML-based generation of constraints for CAD assemblies. For example, the computing system 100 may implement the logic 500 as hardware, executable instructions stored on a machine-readable medium, or as a combination of both. The computing system 100 may implement the logic 500 via the constraint learning engine 110 and the constraint generation engine 112, through which the computing system 100 may perform or execute the logic 500 as a method to support ML-based generation of constraints for CAD assemblies. The following description of the logic 500 is provided using the constraint learning engine 110 and the constraint generation engine 112 as examples. However, various other implementation options by systems are possible.

In implementing the logic 500, the constraint learning engine 110 may access a CAD assembly comprising multiple CAD parts (502) and generate a representation graph of the CAD assembly (504), doing so in any of the ways described herein. Nodes in the representation graph may represent geometric faces of the multiple CAD parts and edges in the representation graph may represent geometric edges of the multiple CAD parts. In implementing the logic 500, the constraint learning engine 110 may also determine constraints in the CAD assembly (506).

For example, the constraint learning engine 110 may determine constraints in the CAD assembly by identifying user-specified constraints in the CAD assembly. Additionally or alternatively, the constraint learning engine 110 may determine constraints in the CAD assembly by inferring the constraints from geometry of the CAD assembly, including by determining a formulaic representation of a given constraint type and comparing selected geometric faces of the CAD assembly using the formulaic representation to determine constraints of the given constraint type between the selected geometric faces. Comparing the selected geometric faces of the CAD assembly by the constraint learning engine 110 may include identifying a geometric face of a given CAD part of the CAD assembly, determining geometric faces of other CAD parts that are within a threshold distance from the identified geometric face of the given CAD part, and applying the formulaic representation of the given constraint type between the identified geometric face of the given CAD part and each of the geometric faces of the other CAD parts to determine the constraints of the given constraint type.

In implementing the logic 500, the constraint learning engine 110 may further insert constraint edges into the representation graph that represent the determined constraints (508), and provide the representation graph as training data to train a machine-learning model (510). In implementing the logic 500, the constraint generation engine 112 generate constraints for a different CAD assembly by applying the machine-learning model for the different CAD assembly (512).

The logic 500 shown in Figure 5 provides an illustrative example by which a computing system 100 may support ML-based generation of constraints for CAD assemblies. Additional or alternative steps in the logic 500 are contemplated herein, including according to any of the various features described herein for the constraint learning engine 110, the constraint generation engine 112, the ML model 120, or any combinations thereof.

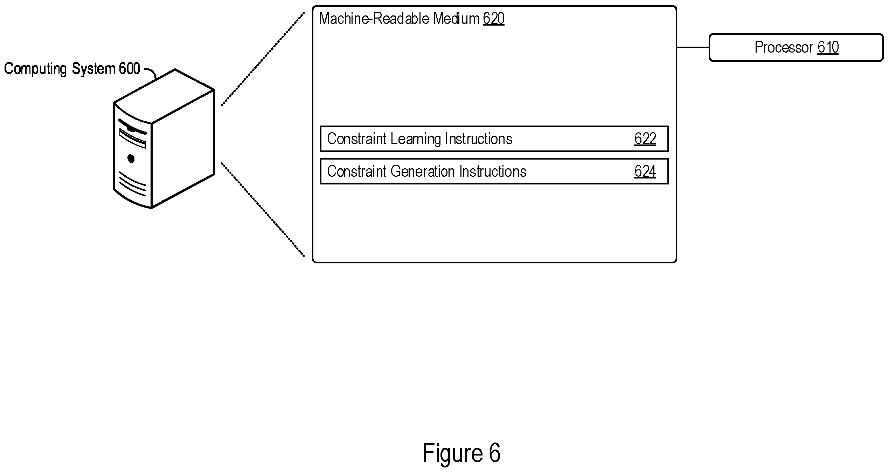

Figure 6 shows an example of a computing system 600 that supports ML-based generation of constraints for CAD assemblies. The computing system 600 may include a processor 610, which may take the form of a single or multiple processors. The processor(s) 610 may include a central processing unit (CPU), microprocessor, or any hardware device suitable for executing instructions stored on a machine-readable medium. The computing system 600 may include a machine-readable medium 620. The machine-readable medium 620 may take the form of any non-transitory electronic, magnetic, optical, or other physical storage device that stores executable instructions, such as the constraint learning instructions 622 and the constraint generation instructions 624 shown in Figure 6. As such, the machine-readable medium 620 may be, for example, Random Access Memory (RAM) such as a dynamic RAM (DRAM), flash memory, spin-transfer torque memory, an Electrically-Erasable Programmable Read-Only Memory (EEPROM), a storage drive, an optical disk, and the like.

The computing system 600 may execute instructions stored on the machine-readable medium 620 through the processor 610. Executing the instructions (e.g., the constraint learning instructions 622 and/or the constraint generation instructions 624) may cause the computing system 600 to perform any of the ML-based constraint generation features described herein, including according to any of the features of the constraint learning engine 110, the constraint generation engine 112, the ML model 120, or any combinations thereof.

For example, execution of the constraint learning instructions 622 by the processor 610 may cause the computing system 600 to access a CAD assembly comprising multiple CAD parts and generate a representation graph of the CAD assembly. Nodes in the representation graph may represent geometric faces of the multiple CAD parts and edges in the representation graph may represent geometric edges of the multiple CAD parts. Execution of the constraint learning instructions 622 by the processor 610 may also cause the computing system 600 to determine constraints in the CAD assembly, wherein the constraints may limit a degree of movement between geometric faces of different CAD parts in the CAD assembly. Execution of the constraint learning instructions 622 by the processor 610 may further cause the computing system 600 to insert constraint edges into the representation graph that represent the determined constraints and provide the representation graph as training data to train a machine-learning model. Execution of the constraint generation instructions 624 by the processor 610 may cause the computing system 600 to generate constraints for a different CAD assembly by applying the machine-learning model for the different CAD assembly.

Any additional or alternative ML-based constraint generation features as described herein may be implemented via the constraint learning instructions 622, constraint generation instructions 624, or a combination of both.

The systems, methods, devices, and logic described above, including the constraint learning engine 110 and the constraint generation engine 112, may be implemented in many different ways in many different combinations of hardware, logic, circuitry, and executable instructions stored on a machine-readable medium. For example, the constraint learning engine 110, the constraint generation engine 112, or combinations thereof, may include circuitry in a controller, a microprocessor, or an application specific integrated circuit (ASIC), or may be implemented with discrete logic or components, or a combination of other types of analog or digital circuitry, combined on a single integrated circuit or distributed among multiple integrated circuits. A product, such as a computer program product, may include a storage medium and machine-readable instructions stored on the medium, which when executed in an endpoint, computer system, or other device, cause the device to perform operations according to any of the description above, including according to any features of the constraint learning engine 110, the constraint generation engine 112, or combinations thereof.

The processing capability of the systems, devices, and engines described herein, including the constraint learning engine 110 and the constraint generation engine 112, may be distributed among multiple system components, such as among multiple processors and memories, optionally including multiple distributed processing systems or cloud/network elements. Parameters, databases, and other data structures may be separately stored and managed, may be incorporated into a single memory or database, may be logically and physically organized in many different ways, and may be implemented in many ways, including data structures such as linked lists, hash tables, or implicit storage mechanisms. Programs may be parts (e.g., subroutines) of a single program, separate programs, distributed across several memories and processors, or implemented in many different ways, such as in a library (e.g., a shared library).

While various examples have been described above, many more implementations are possible.

## Claims

1. A method comprising:
by a computing system (100, 600):
accessing (502) a computer-aided design (CAD) assembly (130) comprising multiple CAD parts that form the CAD assembly (130) to reflect a physical design for a physical product to be manufactured;
generating (504) a representation graph (210) of the CAD assembly (130), wherein nodes in the representation graph (210) represent geometric faces of the multiple CAD parts and edges in the representation graph (210) represent geometric edges of the multiple CAD parts;
determining (506) constraints in the CAD assembly (130) that reflect physical restrictions of movement between geometric faces of different CAD parts in the CAD assembly (130) of the physical product to be manufactured, wherein the constraints are determined by identifying user-specified constraints in the CAD assembly (130) and/or by inferring the constraints from geometry of the CAD assembly (130) based on formulaic representation comprising unit normal of the geometric faces and a displacement vector between centroids of the respective geometric faces;
inserting (508) constraint edges into the representation graph (210) that represent the determined constraints;
providing (510) the representation graph (210) as training data to train a machine-learning model (120); and
generating (512) constraints (430) for a different CAD assembly (410) reflecting a physical design for a different physical product to be manufactured by applying the machine-learning model (120) for the different CAD assembly (410).

2. The method of claim 1, wherein inferring the constraints from the geometry of the CAD assembly (130) comprises:
determining a formulaic representation of a given constraint type; and
comparing selected geometric faces of the CAD assembly (130) using the formulaic representation to determine constraints of the given constraint type between the selected geometric faces.

3. The method of claim 2, wherein comparing the selected geometric faces of the CAD assembly (130) comprises:
identifying a geometric face of a given CAD part of the CAD assembly (130);
determining geometric faces of other CAD parts that are within a threshold distance from the identified geometric face of the given CAD part; and
applying the formulaic representation of the given constraint type between the identified geometric face of the given CAD part and each of the geometric faces of the other CAD parts to determine the constraints of the given constraint type.

4. The method of any of claims 1-3, further comprising inserting feature vectors (230) into the nodes in the representation graph (210), wherein a given feature vector represents topological and geometric features of a given geometric face of the CAD assembly (130).

5. The method of claim 4, wherein the feature vector (230) of a given geometric face of the CAD assembly (130) represents a primitive type of the given geometric face, a number of other geometric faces adjacent to the given geometric face, an area of the given geometric face, a perimeter of the given geometric face, a primitive radius for the given geometric face, a normal vector of the given geometric face, a rotation or scale invariant descriptor of the given geometric face, or any combination thereof.

6. A system (100) comprising:
a constraint learning engine (110) configured to:
access a computer-aided design (CAD) assembly (130) comprising multiple CAD parts that form the CAD assembly (130) to reflect a physical design for a physical product to be manufactured;
generate a representation graph (210) of the CAD assembly (130), wherein nodes in the representation graph (210) represent geometric faces of the multiple CAD parts and edges in the representation graph (210) represent geometric edges of the multiple CAD parts;
determine constraints in the CAD assembly (130) that reflect physical restrictions of movement between geometric faces of different CAD parts in the CAD assembly (130) of the physical product to be manufactured, wherein the constraints are determined by identifying user-specified constraints in the CAD assembly (130) and/or by inferring the constraints from geometry of the CAD assembly (130) based on formulaic representation comprising unit normal of the geometric faces and a displacement vector between centroids of the respective geometric faces;
insert constraint edges into the representation graph (210) that represent the determined constraints; and
provide the representation graph (210) as training data to train a machine-learning model (120); and
a constraint generation engine (112) configured to generate constraints (430) for a different CAD assembly (410) reflecting a physical design for a different physical product to be manufactured by applying the machine-learning model (120) for the different CAD assembly (410).

7. The system (100) of claim 6, wherein the constraint learning engine (110) is configured to infer the constraints from the geometry of the CAD assembly (130) by:
determining a formulaic representation of a given constraint type; and
comparing selected geometric faces of the CAD assembly (130) using the formulaic representation to determine constraints of the given constraint type between the selected geometric faces.

8. The system (100) of claim 7, wherein the constraint learning engine (110) is configured to compare the selected geometric faces of the CAD assembly (130) by:
identifying a geometric face of a given CAD part of the CAD assembly (130);
determining geometric faces of other CAD parts that are within a threshold distance from the identified geometric face of the given CAD part; and
applying the formulaic representation of the given constraint type between the identified geometric face of the given CAD part and each of the geometric faces of the other CAD parts to determine the constraints of the given constraint type.

9. The system (100) of any of claims 6-8, wherein the constraint learning engine (110) is further configured to insert feature vectors (230) into the nodes in the representation graph (210), wherein a given feature vector represents topological and geometric features of a given geometric face of the CAD assembly (130).

10. The system (100) of claim 9, wherein the feature vector (230) of a given geometric face of the CAD assembly (130) represents a primitive type of the given geometric face, a number of other geometric faces adjacent to the given geometric face, an area of the given geometric face, a perimeter of the given geometric face, a primitive radius for the given geometric face, a normal vector of the given geometric face, a rotation or scale invariant descriptor of the given geometric face, or any combination thereof.

11. A non-transitory machine-readable medium (620) comprising instructions (622, 624) that, when executed by a processor (610), cause a computing system (600) to perform a method according to any of claims 1-5.

## Patentansprüche

1. Verfahren, das Folgendes umfasst:
durch ein Rechensystem (100, 600):
Zugreifen (502) auf eine Anordnung (130) für computergestützten Entwurf (CAD), die mehrere CAD-Abschnitte umfasst, die die CAD-Anordnung (130) bilden, um einen physischen Entwurf für ein physisches Produkt, das hergestellt werden soll, widerzuspiegeln;
Erzeugen (504) eines Repräsentationsgraphen (210) der CAD-Anordnung (130), wobei Knoten im Repräsentationsgraphen (210) geometrische Flächen der mehreren CAD-Abschnitte repräsentieren und Kanten im Repräsentationsgraphen (210) geometrische Kanten der mehreren CAD-Abschnitte repräsentieren;
Bestimmen (506) von Einschränkungen in der CAD-Anordnung (130), die physische Beschränkungen einer Bewegung zwischen geometrischen Flächen von verschiedenen CAD-Abschnitten in der CAD-Anordnung (130) des physischen Produkts, das hergestellt werden soll, widerspiegeln, wobei die Einschränkungen durch Identifizieren von anwenderbestimmten Einschränkungen in der CAD-Anordnung (130) und/oder durch Ableiten der Einschränkungen aus der Geometrie der CAD-Anordnung (130) auf der Grundlage einer formelhaften Repräsentation, die die Einheitsnormale der geometrischen Flächen und einen Versatzvektor zwischen Schwerpunkten der jeweiligen geometrischen Flächen umfasst, bestimmt werden;
Einsetzen (508) von Einschränkungskanten in den Repräsentationsgraphen (210), die die bestimmten Einschränkungen repräsentieren;
Bereitstellen (510) des Repräsentationsgraphen (210) als Trainingsdaten, um ein Modell (120) für maschinelles Lernen zu trainieren; und
Erzeugen (512) von Einschränkungen (430) für eine andere CAD-Anordnung (410), die einen physischen Entwurf für ein anderes physisches Produkt widerspiegelt, das durch Anwenden des Modells (120) für maschinelles Lernen für die andere CAD-Anordnung (410) hergestellt werden soll.

2. Verfahren nach Anspruch 1, wobei das Ableiten der Einschränkungen aus der Geometrie der CAD-Anordnung (130) Folgendes umfasst:
Bestimmen einer formelhaften Repräsentation eines gegebenen Einschränkungstyps und
Vergleichen von gewählten geometrischen Flächen der CAD-Anordnung (130) unter Verwendung der formelhaften Repräsentation, um Einschränkungen des gegebenen Einschränkungstyps zwischen den gewählten geometrischen Flächen zu bestimmen.

3. Verfahren nach Anspruch 2, wobei das Vergleichen der gewählten geometrischen Flächen der CAD-Anordnung (130) Folgendes umfasst:
Identifizieren einer geometrischen Fläche eines gegebenen CAD-Abschnitts der CAD-Anordnung (130);
Bestimmen von geometrischen Flächen von weiteren CAD-Abschnitten, die in einer Schwellenwertentfernung von der identifizierten geometrischen Fläche des gegebenen CAD-Abschnitts sind; und
Anwenden der formelhaften Repräsentation des gegebenen Einschränkungstyps zwischen der identifizierten geometrischen Fläche des gegebenen CAD-Abschnitts und jeder der geometrischen Flächen der weiteren CAD-Abschnitte, um die Einschränkungen des gegebenen Einschränkungstyps zu bestimmen.

4. Verfahren nach einem der Ansprüche 1-3, das ferner ein Einsetzen von Merkmalsvektoren (230) in die Knoten im Repräsentationsgraphen (210) umfasst, wobei ein gegebener Merkmalsvektor topologische und geometrische Merkmale einer gegebenen geometrischen Fläche der CAD-Anordnung (130) repräsentiert.

5. Verfahren nach Anspruch 4, wobei der Merkmalsvektor (230) einer gegebenen geometrischen Fläche der CAD-Anordnung (130) einen Grundelementtyp der gegebenen geometrischen Fläche, eine Anzahl weiterer geometrischer Flächen, die zur gegebenen geometrischen Fläche benachbart sind, einen Flächeninhalt der gegebenen geometrischen Fläche, einen Umfang der gegebenen geometrischen Fläche, einen Grundelementradius für die gegebene geometrische Fläche, einen Normalenvektor der gegebenen geometrischen Fläche, einen drehungs- oder skalierungsinvarianten Deskriptor der gegebenen geometrischen Fläche oder eine beliebige Kombination davon repräsentiert.

6. System (100), das Folgendes umfasst:
eine Einschränkungslernmaschine (110), die konfiguriert ist zum:
Zugreifen auf eine Anordnung (130) für computergestützten Entwurf (CAD), die mehrere CAD-Abschnitte umfasst, die die CAD-Anordnung (130) bilden, um einen physischen Entwurf für ein physisches Produkt, das hergestellt werden soll, widerzuspiegeln;
Erzeugen eines Repräsentationsgraphen (210) der CAD-Anordnung (130), wobei Knoten im Repräsentationsgraphen (210) geometrische Flächen der mehreren CAD-Abschnitte repräsentieren und Kanten im Repräsentationsgraphen (210) geometrische Kanten der mehreren CAD-Abschnitte repräsentieren;
Bestimmen von Einschränkungen in der CAD-Anordnung (130), die physische Beschränkungen einer Bewegung zwischen geometrischen Flächen von verschiedenen CAD-Abschnitten in der CAD-Anordnung (130) des physischen Produkts, das hergestellt werden soll, widerspiegeln, wobei die Einschränkungen durch Identifizieren von anwenderbestimmten Einschränkungen in der CAD-Anordnung (130) und/oder durch Ableiten der Einschränkungen aus der Geometrie der CAD-Anordnung (130) auf der Grundlage einer formelhaften Repräsentation, die die Einheitsnormale der geometrischen Flächen und einen Versatzvektor zwischen Schwerpunkten der jeweiligen geometrischen Flächen umfasst, bestimmt werden;
Einsetzen von Einschränkungskanten in den Repräsentationsgraphen (210), die die bestimmten Einschränkungen repräsentieren; und
Bereitstellen des Repräsentationsgraphen (210) als Trainingsdaten, um ein Modell (120) für maschinelles Lernen zu trainieren; und
eine Einschränkungserzeugungsmaschine (112), die konfiguriert ist, Einschränkungen (430) für eine andere CAD-Anordnung (410), die einen physischen Entwurf für ein anderes physisches Produkt widerspiegelt, das durch Anwenden des Modells (120) für maschinelles Lernen für die verschiedene CAD-Anordnung (410) hergestellt werden soll, zu erzeugen.

7. System (100) nach Anspruch 6, wobei die Einschränkungslernmaschine (110) konfiguriert ist, die Einschränkungen aus der Geometrie der CAD-Anordnung (130) durch Folgendes abzuleiten:
Bestimmen einer formelhaften Repräsentation eines gegebenen Einschränkungstyps und
Vergleichen von gewählten geometrischen Flächen der CAD-Anordnung (130) unter Verwendung der formelhaften Repräsentation, um Einschränkungen des gegebenen Einschränkungstyps zwischen den gewählten geometrischen Flächen zu bestimmen.

8. System (100) nach Anspruch 7, wobei die Einschränkungslernmaschine (110) konfiguriert ist, die gewählten geometrischen Flächen der CAD-Anordnung (130) durch Folgendes zu vergleichen:
Identifizieren einer geometrischen Fläche eines gegebenen CAD-Abschnitts der CAD-Anordnung (130);
Bestimmen von geometrischen Flächen von weiteren CAD-Abschnitten, die in einer Schwellenwertentfernung von der identifizierten geometrischen Fläche des gegebenen CAD-Abschnitts sind; und
Anwenden der formelhaften Repräsentation des gegebenen Einschränkungstyps zwischen der identifizierten geometrischen Fläche des gegebenen CAD-Abschnitts und jeder der geometrischen Flächen der weiteren CAD-Abschnitte, um die Einschränkungen des gegebenen Einschränkungstyps zu bestimmen.

9. System (100) nach einem der Ansprüche 6-8, wobei die Einschränkungslernmaschine (110) ferner konfiguriert ist, Merkmalsvektoren (230) in die Knoten im Repräsentationsgraphen (210) einzusetzen, wobei ein gegebener Merkmalsvektor topologische und geometrische Merkmale einer gegebenen geometrischen Fläche der CAD-Anordnung (130) repräsentiert.

10. System (100) nach Anspruch 9, wobei der Merkmalsvektor (230) einer gegebenen geometrischen Fläche der CAD-Anordnung (130) einen Grundelementtyp der gegebenen geometrischen Fläche, eine Anzahl weiterer geometrischer Flächen, die zur gegebenen geometrischen Fläche benachbart sind, einen Flächeninhalt der gegebenen geometrischen Fläche, einen Umfang der gegebenen geometrischen Fläche, einen Grundelementradius für die gegebene geometrische Fläche, einen Normalenvektor der gegebenen geometrischen Fläche, einen drehungs- oder skalierungsinvarianten Deskriptor der gegebenen geometrischen Fläche oder eine beliebige Kombination davon repräsentiert.

11. Nicht transitorisches maschinenlesbares Medium (620), das Befehle (622, 624) umfasst, die, wenn sie durch einen Prozessor (610) ausgeführt werden, verursachen, dass ein Rechensystem (600) ein Verfahren nach einem der Ansprüche 1-5 durchführt.

## Revendications

1. Procédé, comprenant :
au moyen d'un système informatique (100, 600) :
l'accès (502) à un assemblage en conception assistée par ordinateur (CAO) (130) comprenant une pluralité de pièces en CAO qui forment l'assemblage en CAO (130) pour refléter une conception physique pour un produit physique à fabriquer ;
la génération (504) d'un graphe de représentation (210) de l'assemblage en CAO (130), les nœuds dans le graphe de représentation (210) représentant des faces géométriques de la pluralité de pièces en CAO et les arêtes dans le graphe de représentation (210) représentant des arêtes géométriques de la pluralité de pièces en CAO ;
la détermination (506) de contraintes dans l'assemblage en CAO (130) qui reflètent des restrictions physiques de mouvement entre des faces géométriques de différentes pièces en CAO dans l'assemblage en CAO (130) du produit physique à fabriquer, les contraintes étant déterminées par identification de contraintes spécifiées par l'utilisateur dans l'assemblage en CAO (130) et/ou par inférence des contraintes à partir de la géométrie de l'assemblage en CAO (130) sur la base d'une représentation sous forme de formule comprenant une normale unitaire des faces géométriques et un vecteur de déplacement entre les centres de gravité des faces géométriques respectives ;
l'insertion (508) d'arêtes de contrainte dans le graphe de représentation (210) qui représentent les contraintes déterminées ;
la fourniture (510) du graphe de représentation (210) en tant que données d'entraînement afin d'entraîner un modèle d'apprentissage machine (120) ; et
la génération (512) de contraintes (430) pour un assemblage en CAO (410) différent reflétant une conception physique pour un produit physique à fabriquer différent par application du modèle d'apprentissage machine (120) pour l'assemblage en CAO (410) différent.

2. Procédé selon la revendication 1, dans lequel l'inférence des contraintes à partir de la géométrie de l'assemblage en CAO (130) comprend :
la détermination d'une représentation sous forme de formule d'un type de contrainte donné ; et
la comparaison de faces géométriques sélectionnées de l'assemblage en CAO (130) à l'aide de la représentation sous forme de formule afin de déterminer des contraintes du type de contrainte donné entre les faces géométriques sélectionnées.

3. Procédé selon la revendication 2, dans lequel la comparaison des faces géométriques sélectionnées de l'assemblage en CAO (130) comprend :
l'identification d'une face géométrique d'une pièce en CAO donnée de l'assemblage en CAO (130) ;
la détermination de faces géométriques d'autres pièces en CAO situées au plus à une distance seuil de la face géométrique identifiée de la pièce en CAO donnée ; et
l'application de la représentation sous forme de formule du type de contrainte donné entre la face géométrique identifiée de la pièce en CAO donnée et chacune des faces géométriques des autres pièces en CAO afin de déterminer les contraintes du type de contrainte donné.

4. Procédé selon l'une quelconque des revendications 1 à 3, comprenant en outre l'insertion de vecteurs de caractéristiques (230) dans les nœuds dans le graphe de représentation (210), un vecteur de caractéristiques donné représentant des caractéristiques topologiques et géométriques d'une face géométrique donnée de l'assemblage en CAO (130).

5. Procédé selon la revendication 4, dans lequel le vecteur de caractéristiques (230) d'une face géométrique donnée de l'assemblage en CAO (130) représente un type de primitive de la face géométrique donnée, un nombre d'autres faces géométriques adjacentes à la face géométrique donnée, une aire de la face géométrique donnée, un périmètre de la face géométrique donnée, un rayon de primitive pour la face géométrique donnée, un vecteur normal de la face géométrique donnée, un descripteur invariant par rotation ou changement d'échelle de la face géométrique donnée, ou toutes leurs combinaisons.

6. Système (100), comprenant :
un moteur d'apprentissage de contraintes (110) configuré pour :
accéder à un assemblage en conception assistée par ordinateur (CAO) (130) comprenant une pluralité de pièces en CAO qui forment l'assemblage en CAO (130) pour refléter une conception physique pour un produit physique à fabriquer ;
générer un graphe de représentation (210) de l'assemblage en CAO (130), les nœuds dans le graphe de représentation (210) représentant des faces géométriques de la pluralité de pièces en CAO et les arêtes dans le graphe de représentation (210) représentant des arêtes géométriques de la pluralité de pièces en CAO ;
déterminer des contraintes dans l'assemblage en CAO (130) qui reflètent des restrictions physiques de mouvement entre des faces géométriques de différentes pièces en CAO dans l'assemblage en CAO (130) du produit physique à fabriquer, les contraintes étant déterminées par identification de contraintes spécifiées par l'utilisateur dans l'assemblage en CAO (130) et/ou par inférence des contraintes à partir de la géométrie de l'assemblage en CAO (130) sur la base d'une représentation sous forme de formule comprenant une normale unitaire des faces géométriques et un vecteur de déplacement entre les centres de gravité des faces géométriques respectives ;
insérer des arêtes de contrainte dans le graphe de représentation (210) qui représentent les contraintes déterminées ; et
fournir le graphe de représentation (210) en tant que données d'entraînement afin d'entraîner un modèle d'apprentissage machine (120) ; et
un moteur de génération de contraintes (112) configuré pour générer des contraintes (430) pour un assemblage en CAO (410) différent reflétant une conception physique pour un produit physique à fabriquer différent en appliquant le modèle d'apprentissage machine (120) pour l'assemblage en CAO (410) différent.

7. Système (100) selon la revendication 6, dans lequel le moteur d'apprentissage de contraintes (110) est configuré pour inférer les contraintes à partir de la géométrie de l'assemblage en CAO (130) en :
déterminant une représentation sous forme de formule d'un type de contrainte donné ; et
comparant des faces géométriques sélectionnées de l'assemblage en CAO (130) à l'aide de la représentation sous forme de formule afin de déterminer des contraintes du type de contrainte donné entre les faces géométriques sélectionnées.

8. Système (100) selon la revendication 7, dans lequel le moteur d'apprentissage de contraintes (110) est configuré pour comparer les faces géométriques sélectionnées de l'assemblage en CAO (130) en :
identifiant une face géométrique d'une pièce en CAO donnée de l'assemblage en CAO (130) ;
déterminant des faces géométriques d'autres pièces en CAO situées au plus à une distance seuil de la face géométrique identifiée de la pièce en CAO donnée ; et
appliquant la représentation sous forme de formule du type de contrainte donné entre la face géométrique identifiée de la pièce en CAO donnée et chacune des faces géométriques des autres pièces en CAO afin de déterminer les contraintes du type de contrainte donné.

9. Système (100) selon l'une quelconque des revendications 6 à 8, dans lequel le moteur d'apprentissage de contraintes (110) est configuré en outre pour insérer des vecteurs de caractéristiques (230) dans les nœuds dans le graphe de représentation (210), un vecteur de caractéristiques donné représentant des caractéristiques topologiques et géométriques d'une face géométrique donnée de l'assemblage en CAO (130).

10. Système (100) selon la revendication 9, dans lequel le vecteur de caractéristiques (230) d'une face géométrique donnée de l'assemblage en CAO (130) représente un type de primitive de la face géométrique donnée, un nombre d'autres faces géométriques adjacentes à la face géométrique donnée, une aire de la face géométrique donnée, un périmètre de la face géométrique donnée, un rayon de primitive pour la face géométrique donnée, un vecteur normal de la face géométrique donnée, un descripteur invariant par rotation ou changement d'échelle de la face géométrique donnée, ou toutes leurs combinaisons.

11. Support non transitoire (620) lisible par machine comprenant des instructions (622, 624) qui, lorsqu'elles sont exécutées par un processeur (610), amènent un système informatique (600) à réaliser un procédé selon l'une quelconque des revendications 1 à 5.
